# EUROPEAN PATENT APPLICATION

(11) **EP 0 774 679 A1**
(43) Date of publication of application: **21.05.1997**
(21) Application number: 96118262.3
(22) Date of filing: 14.11.1996
(51) Int. Cl.: G02B 6/293, G02B 6/124, G02B 6/34

(54) **Optical filter having waveguide structure**

(30) Priority: 20.11.1995 JP 301455/95
(71) Applicant: SUMITOMO ELECTRIC INDUSTRIES, LTD., Osaka-shi, Osaka 541 (JP); NIPPON TELEGRAPH AND TELEPHONE CORPORATION, Shinjuku-ku, Tokyo 163-19 (JP)
(72) Inventor: Ito, Masumi, c/o Sumitomo Elec. Ind., Ltd., Yokohama-shi, Kanagawa 244 (JP); Inoue, Akira, c/o Sumitomo Elec. Ind., Ltd., Yokohama-shi, Kanagawa 244 (JP); Iwashima, Toru, c/o Sumitomo Elelc. Ind., Ltd., Yokohama-shi, Kanagawa 244 (JP); Miyajima, Yoshiaki, Hitachinaka-shi, Ibaraki 312 (JP)
(74) Representative: Ritter und Edler von Fischern, Bernhard, Dipl.-Ing.

(57) **Abstract**

The present invention relates to an optical filter having a waveguide structure constituted by a core region (12) in which a grating (16) for reflecting light of a predetermined wavelength is formed at a predetermined portion and a cladding region (14) which has a lower refractive index than the core region and covers the core region. In particular, this optical filter has a light-absorbing structure (140) for absorbing, of light to be reflected by the grating, a light component radiated from the grating to the cladding region. This light-absorbing structure is disposed, at least, at a region where the light component radiated from the grating to the cladding region reaches.

## Description

### BACKGROUND OF THE INVENTION

### Field of the Invention

The present invention relates to an optically-functional device having a waveguide structure and, in particular, to an optical filter in which a grating having an optical filter function is provided in a part of an optical waveguide.

### Related Background Art

In an inspection system for an optical line, to which an inspection apparatus preforming optical time domain reflectometry method (referred to as "OTDR apparatus" hereinafter) is applied, an optical filter for reflecting inspection light advanced through the optical line is generally disposed at a predetermined portion of the optical line. This optical filter has a light-blocking function for cutting off the inspection light so as to prevent it from being transmitted to a subscriber's house and a light-reflecting function for reflecting the inspection light propagated through the optical line so as to send it back to the inspection apparatus, thereby making it contribute to inspection of whether there are fault points in the optical line or not as well as to detection of light transmission characteristics of the optical line.

As the optical filter (optically-functional device) used in the inspection system for optical lines, particularly preferable is an optical filter in which a region having an optical filter function (referred to as "filter region" hereinafter) is disposed at a core region of an optical waveguide (including optical fiber, thin-film waveguide, and the like). For example, when a filter region is formed at a predetermined portion of a communication optical fiber used as an optical line, an optical fiber type optical filter is obtained. Such an optical filter itself can be used as an optical line. Accordingly, when an optical fiber is used as an optical filter to constitute an inspection system for optical lines, unlike the case where a dielectric multilayer film filter is used, it is unnecessary for filter parts to be inserted into the optical line, whereby loss in signal light can be minimized. Also, an optical filter formed when a filter region is disposed in a thin-film waveguide is convenient for various reasons, e.g., it not only reflects the inspection light but also can output a branch of the signal light transmitted through the filter region.

As the filter region of such an optical filter having a waveguide structure, grating has conventionally been used. In this specification, "grating" refers to a region in an optical waveguide where effective refractive index periodically changes between its minimum value and maximum value along the optical axis of the optical waveguide (along the traveling direction of the light that travels through the optical waveguide). As disclosed in Japanese Patent Laid-Open No. 62-500052, a grating can be formed when silica glass doped with germanium is irradiated with an interference pattern of ultraviolet rays. This grating is formed due to a phenomenon that the refractive index of the glass increases according to a light intensity distribution of the interference pattern. The grating formed at the core region of the optical waveguide reflects, of the light traveling through the optical waveguide, a light component having a narrow wavelength width centered at a predetermined wavelength (Bragg wavelength). This wavelength (referred to as "reflection wavelength of the grating" hereinafter) has been known to be determined according to the period of the grating (grating pitch).

### SUMMARY OF THE INVENTION

The present invention relates to an optical filter having a waveguide structure which utilizes a difference in refractive index between a core region and a cladding region so as to transmit light of a predetermined wavelength as being confined in a predetermined region, wherein a grating for reflecting only light with a particular wavelength is provided, at least, at a predetermined portion in the core region. In particular, it is an object of the present invention to provide an optical filter having a structure which realizes a high light-blocking ratio with respect to the light to be reflected by the grating as viewed from the light-emitting end. In other words, this optical filter has a structure for blocking, of the light to be reflected by the grating, the advance of a light component radiated from the grating to the cladding region.

In order to realize an optical filter having such a structure, the inventors have studied the prior art as explained in the following.

In the conventional filter having a waveguide structure in which the above-mentioned grating is disposed at a predetermined portion of the core region, there exists an undesirable light component which passes through the grating without being reflected thereby though it has a wavelength coinciding with the reflection wavelength of the grating. Accordingly, such an optical filter has not fully exhibited a filter function of blocking light with a predetermined wavelength as viewed from the light-emitting end.

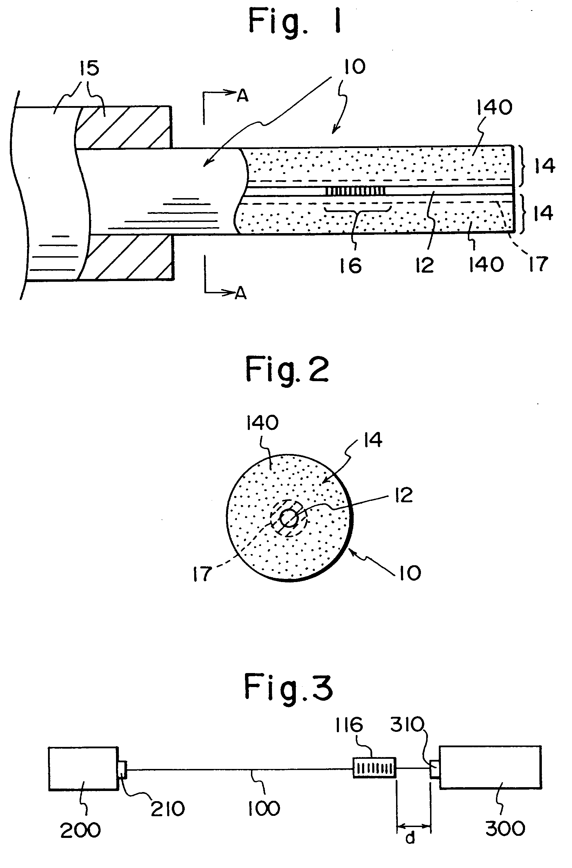

The optical filter according to the present invention, for example as shown in Fig. 1, is an optical filter having a waveguide structure (i.e., structure identical to an optical fiber or a thin-film waveguide) constituted, at least, by a core region 12 which has a predetermined refractive index and in which a grating 16 for reflecting light of a predetermined wavelength is disposed, at least, at a predetermined portion, and a cladding region 14 which has a lower refractive index than the core region 12 and covers the core region 12. In particular, this optical filter 10 characteristically has a light-absorbing structure for absorbing, of light to be reflected by the grating 16, a light component radiated from the grating 16 to the cladding region 14. This light-absorbing structure is disposed, at least, at a region where the light radiated from the grating 16 to the cladding region 14 reaches.

In this specification, "waveguide" refers to a circuit or line which utilizes a difference in refractive index between a core region and a cladding region so as to confine light into a predetermined region and transfer thus confined light. The waveguide in this specification includes optical fiber, waveguide constituted by laminated thin films (referred to as "thin-film waveguide" hereinafter), and the like.

A first light-absorbing structure is realized, for example as shown in Fig. 1, by adding a light-absorbing material which absorbs the light radiated from the grating 16 toward the cladding region 14 to at least a part of the cladding region 14 surrounding the grating 16. Specifically, the glass region doped with the light-absorbing material is preferably an outer region 140 of the cladding region 14 which is positioned outside of a light propagation region 17 (see Fig. 2) defined by the mode field diameter of light propagated through the core region 12, while being spaced from the core region 12 by a predetermined distance.

In the optical filter according to the present invention, of the light with a wavelength coinciding with the reflection wavelength of the grating 16 (light to be reflected by the grating 16), a light component which is radiated from the grating 16 to the cladding region 14 so as to travel through the cladding region 14 toward a portion in front of the grating 16 is absorbed by the light-absorbing material added to the predetermined region 140 in the cladding region 14, whereby the light having the reflection wavelength of the grating 16 is blocked with a high ratio.

As the light-absorbing material, a material which absorbs light at the above-mentioned reflection wavelength with a high ratio is preferable. Further, it is preferable for such a material to absorb, as less as possible, light which is to be transmitted through the grating 16. Here, "light to be transmitted through the grating 16 as viewed from the light-emitting end" is a concept opposite to "light to be blocked as viewed from the light-emitting end (light to be reflected by the grating 16)." For example, when the optical filter according to the present invention is applied to an inspection system for an optical line, "light to be blocked" corresponds to inspection light, whereas "light to be transmitted" corresponds to signal light used for optical communications.

As mentioned above, the light-absorbing material added to the outer region 140 of the cladding region 14 is a material which eliminates the light at the reflection wavelength by absorbing it. Depending on the kind of the light-absorbing material, however, there is a possibility that such a material may also absorb, with a certain ratio, the light to be transmitted through the grating 16. Nevertheless, when the light-absorbing material is added to the outer region 140 positioned outside of the light propagation region 17 defined by the mode field diameter in the optical filter with respect to light to be transmited, the light to be transmitted is hardly absorbed thereby, so that it can be prevented from attenuating.

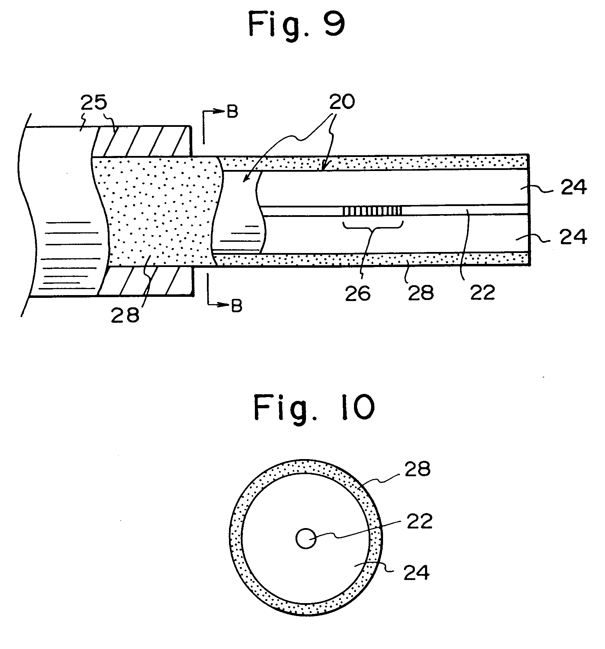

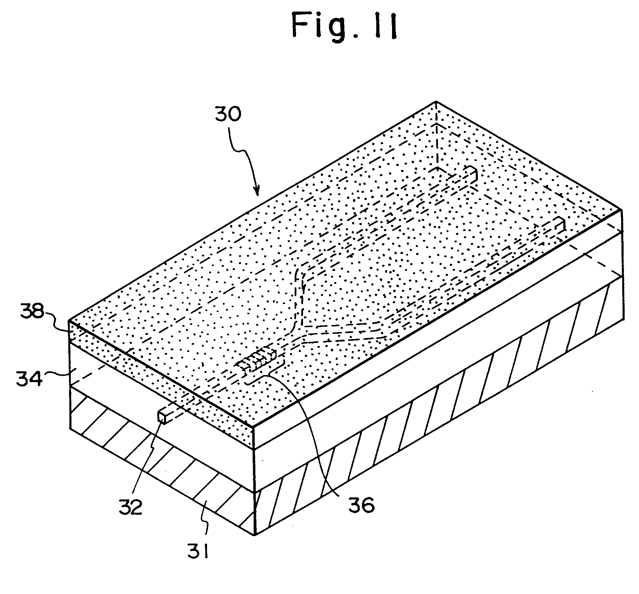

A second light-absorbing structure is realized, for example as shown in Fig. 9, when a light-absorbing layer 28 for absorbing the light radiated from a grating 26 to a cladding region 24 is disposed on an outer surface of at least a part of the cladding region 24 surrounding the grating 26. Preferably, when the optical filter according to the present invention has a thin-film waveguide structure, for example as shown in Fig. 11, a light-absorbing layer 38 is disposed on an upper surface of a cladding region 34 covering a core region 32.

In this optical filter according to the present invention, of the light radiated from the grating 26 to the cladding region 24 so as to reach the outer surface of the cladding region 24 (light to be reflected by the grating 26), a light component emitted from the cladding region 24 is absorbed by the light-absorbing layer 28. Further, the grating 26 can be formed at an end portion of the optical filter. Accordingly, even when the optical filter (of optical fiber type) is accommodated within an optical filter such that the grating 26 is positioned within a ferrule of the optical connector, suppressed is a phenomenon that the light radiated from the grating 26 to the cladding region 24 is emitted out of the cladding region 24 so as to be reflected by the ferrule and then returns into the cladding region 24 so as to tranvel toward a portion in front of the grating 26. Also, since the light-absorbing material generally has a higher refractive index than the air, the light emitted from the cladding region 24 has a higher power when the light-absorbing layer 28 is disposed on the surface of the cladding region 24 as compared with the case where an air layer exists on the cladding region 24. Since such light is absorbed by the light-absorbing material, the power of the light radiated from the grating 26 to the cladding region 24 so as to travel through the cladding region 24 toward a portion in front of the grating 26 is securely lowered. Consequently, the light having a wavelength which coincides with the reflection wavelength of the grating 26 is blocked with a high ratio as viewed from the light-emitting end.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is a view showing a lateral cross-sectional configuration of a first embodiment of an optical filter according to the present invention;
Fig. 2 is a view showing a cross-sectional configuration of the optical filter of Fig. 1 taken along line A-A shown in Fig. 1;
Fig. 3 is a view showing a schematic configuration of an experimental apparatus to which the optical filter of Fig. 1 is applied;
Figs. 4 and 5 are charts showing spectra of inspection light transmitted through a filter region including a grating as detected by use of the apparatus of Fig. 3, indicating results of detection in cases where d is set to 21 mm and 500 mm, respectively;
Fig. 6 is a view showing how light radiated from a grating formed in a core region to a cladding region behaves within an optical filter;
Fig. 7 is a view showing a first modified example of the optical filter shown in Fig. 1;
Fig. 8 is a view showing a second modified example of the optical filter shown in Fig. 1;
Fig. 9 is a view showing a partial cross-sectional configuration of a second embodiment of an optical filter according to the present invention;
Fig. 10 is a view showing a cross-sectional configuration of the optical filter of Fig. 9 taken along line B-B shown in Fig. 9; and
Fig. 11 is a perspective view showing an overall configuration of an optical filter according to the present invention having a thin-film waveguide structure.

### DESCRIPTION OF THE PREFERRED EMBODIMENTS

In the following, the optical filter according to the present invention will be explained with reference to Figs. 1 to 11. Here, in explanation of the drawings, constituents identical to each other will be referred to with marks identical to each other without their overlapping explanations repeated. Also, ratios of sizes in the drawings do not always coincide with those explained.

Fig. 1 is a lateral cross-sectional view showing a configuration of a first embodiment of an optical filter 10 (of optical fiber type) according to the present invention. Fig. 2 is a cross-sectional view of the optical filter 10 taken along line A-A shown in Fig. 1. This optical filter 10 is a single-mode optical filter comprising a core region 12 and a cladding region 14, in which a grating 16 having an optical filter function is formed at a predetermined portion of the core region 12.

The optical filter 10 can be used in an inspection system for optical communication network using an OTDR apparatus. In an optical line constituting an optical communication network, while signal light for optical communications is transmitted from a station to a subscriber's terminal, inspection light is transmitted from the OTDR apparatus in order to inspect the state of the optical line. As the inspection light, light having a wavelength different from that of the signal light is used. In order to prevent the inspection light from entering the subscriber's terminal, it is necessary for an optical filter to be disposed at a terminal portion (near the light-emitting end) of the optical line. In the optical filter 10, which fulfills such necessity, the grating 16 for reflecting the inspection light is disposed in the core region 12, which is the optical line, so as to block the inspection light as viewed from the subscriber's terminal side.

The optical filter 10 is an optical fiber mainly composed of silica glass (SiO₂). While the cladding region 14 is a glass region constituted by substantially pure silica glass, the core region 12 is a glass region doped with GeO₂ which is a material for increasing the refractive index. Accordingly, in the optical filter 10, a relative refractive index between the core region 12 and the cladding region 14 is set about 0.35%.

The grating 16 is a region in the core region 12 where its effective refractive index periodically changes between the minimum refractive index and the maximum refractive index along the optical axis (i.e., direction in which the signal light or inspection light advances). In other words, the grating 16 is a region having a refractive index distribution in which the effective refractive index repeatedly changes between the minimum refractive index and the maximum refractive index along the optical axis. This grating 16 reflects light over a relatively narrow wavelength range centered at a wavelength (Bragg wavelength) which is determined by the period of its change in refractive index, i.e., grating period (also known as "grating pitch"). This reflection wavelength of the grating 16 coincides with the wavelength of the above-mentioned inspection light.

The grating 16 can be formed according to a phenomenon that, when silica-glass doped with germanium is irradiated with ultraviolet rays, the refractive index at the irradiated portion thereof increases by an amount corresponding to the intensity of the ultraviolet rays. Namely, when ultraviolet rays irradiate the core region 12 doped with germanium from the surface of the cladding region 14 along two directions so as to form an interference fringe at a region where the core region 12 is positioned, a refractive index distribution corresponding to the light intensity distribution of the interference fringe is formed in the core region 12. The region having thus formed refractive index is the grating 16. In this case, the minimum refractive index at the portion where the grating 16 is formed substantially coincides with the original effective refractive index (effective refractive index before the ultraviolet irradiation) of the core region 12.

Numeral 15 in Figs. 1 and 2 refers to a resin coating which covers the surface of the cladding region 14, functioning to protect the core region 12 and the cladding region 14. The coating 15 is eliminated at a tip portion of the optical filter 10 (optical fiber) so that the core region 12 can be irradiated with ultraviolet rays from two directions in order to form the grating 16 therein as mentioned above. Also, numeral 17 refers to a light-propagation region defined by the mode field diameter in the optical filter with respect to the signal light used for optical communications.

As shown in Figs. 1 and 2, in the optical filter 10, of the cladding region 14, an outer region 140 positioned outside of the light propagation region of the signal light 17 is doped with a light-absorbing material. This light-absorbing material is a material which efficiently absorbs light which is to be reflected by the grating 16. As the light-absorbing material, various materials can be used according to the reflection wavelength of the grating 16. For example, praseodymium, which is a rare earth element, can be used when the reflection wavelength is at a band of 1.3 µm, whereas erbium, which is a rare earth element, can be used when the reflection wavelength is at a band of 1.55 µm.

By the light-absorbing material added to a part (outer region 140) of the cladding region 14, the optical filter 10 characteristically absorbs, of light (inspection light) which is to be reflected by the grating 16, a light component radiated from the grating 16 to the cladding region 14.

First, in the following, a phenomenon that light is radiated from the grating 16 formed in the core region 12 to the cladding region 14 will be explained. The inventors have confirmed the existence of this phenomenon by using an apparatus shown in Fig. 3 to conduct an experiment. This experimental apparatus is used for investigating a fact that light at the reflection wavelength of a grating 116 is radiated from the grating 116 formed in a core of an optical fiber 100 to a cladding. Here, the optical fiber 100 in which the grating 116 has been formed is equivalent to the optical filter 10 having a waveguide structure according to the present invention. The optical fiber 100 is a silica glass-based single-mode fiber whose core is doped with germanium. The grating 116 has a length of 10 mm, a predetermined grating pitch, and a reflection wavelength of about 1,554 nm. The cladding of the optical fiber 100 is coated with a resin material except for both end portions thereof. One end thereof from which the resin coating has been removed is connected to a semiconductor laser diode (SLD) 200 by way of a fiber adapter 210. The SLD 200 is a semiconductor light-emitting device which outputs light in a predetermined wavelength range including the reflection wavelength of the grating 116. The other end from which the resin coating has been removed is connected to a spectrum analyzer 300 by way of a fiber adapter 310. The grating 116 is formed, in the portion of the optical fiber 100 without the resin coating, at a position separated by a distance d from the end face opposed to the spectrum analyzer 300.

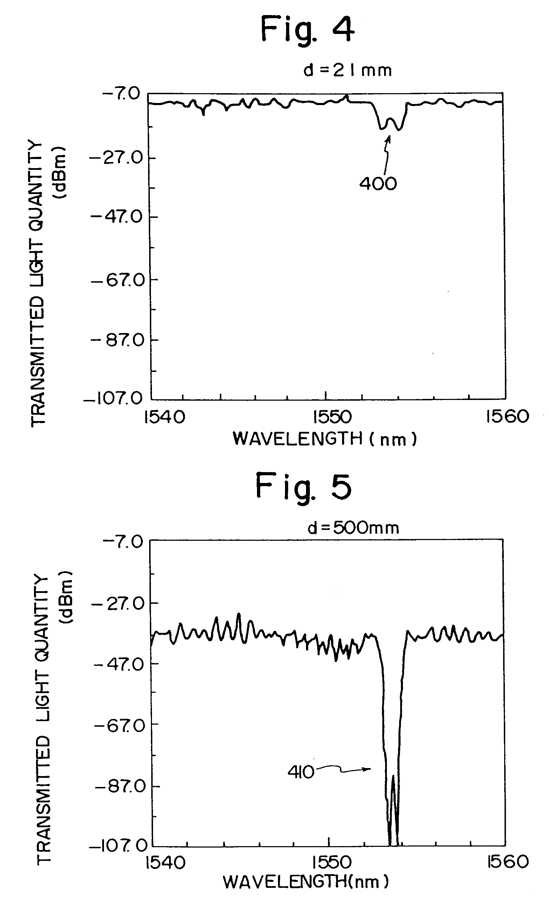

The inventors caused the SLD 200 to emit light so as to make inspection light incident on the optical fiber 100 and detected, by the spectrum analyzer 300, spectra of light transmitted through the portion having the grating 116 for the cases where d was 21 mm (Fig. 4) and 500 mm (Fig. 5), respectively. Figs. 4 and 5 show their corresponding results of detection. While decrease peaks 400 and 410 in the transmitted light quantity due to reflection of light at the grating 116 appear respectively in Figs. 4 and 5, the decrease peak 400 in the case where d = 21 mm is remarkably smaller than the decrease peak 410 in the case where d = 500 mm. Namely, the amount of attenuation in transmission of the light having a wavelength to be blocked by the grating 116 in the case where d = 21 mm is smaller than that in the case where d = 500 mm. Since the grating 116 disposed in the optical fiber 100 has the same configuration regardless of whether d = 21 mm or d = 500 mm, the difference in amount of attenuation in transmission is not caused by the reflectance of the grating 116 but the difference in distance from the grating 116 to the spectrum analyzer 300.

In view of this fact, the above-mentioned difference in amount of attenuation in transmission is considered as follows. Since the grating 116 includes a portion whose refractive index has locally increased, inconsistency in mode field diameter is generated between the portion where the grating is formed and the other portion. When light of the reflection wavelength of the grating reaches the grating, a part thereof advances through the grating while being reflected thereby. Here, due to the above-mentioned inconsistency in mode field diameter, light radiated from each section of the grating to the cladding is generated.

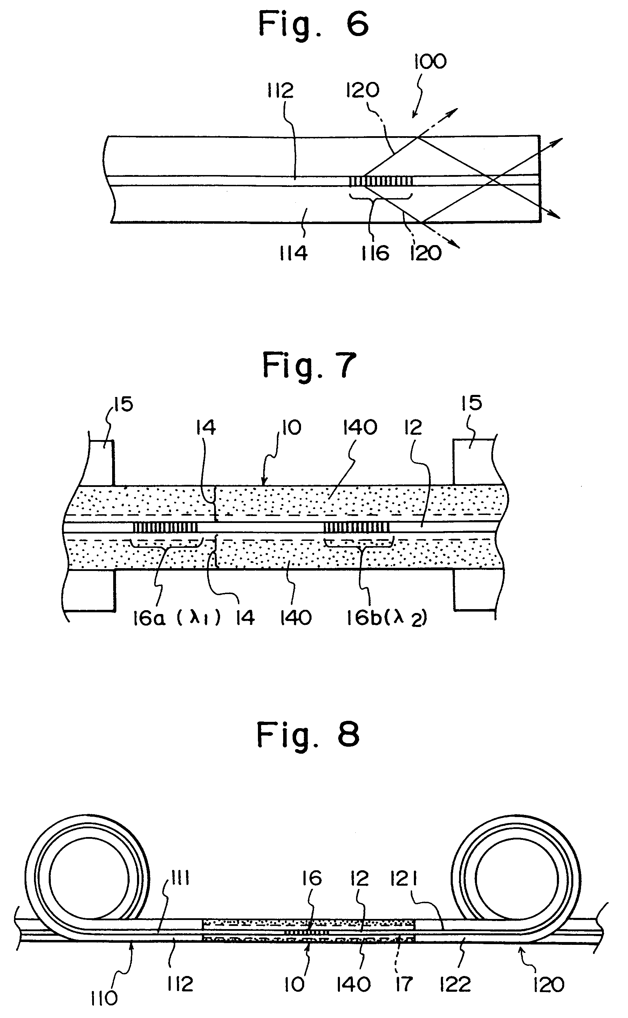

Fig. 6 is a view for explaining how the light radiated from the grating 116 to a cladding behaves within the optical fiber 100. In this drawing, numeral 112 refers to a core of the optical fiber 100, whereas numeral 114 refers to the cladding. Also, numeral 120 refers to light radiated from the grating 116 to the cladding 114. As shown in Fig. 6, a part of such light is radiated to the outside of the cladding 114. Also, a part of the light radiated from the grating 116 advances through a region comprising the cladding 114 and the core 112 so as to reach a portion (right side in the drawing) in front of the grating 116. In this case, since the light-confining effect of the glass region comprising the cladding 114 and the core 112 is weaker than that in the core 112 alone, the above-mentioned light attenuates its power by a relatively large amount as it advances through this glass region. Accordingly, as in the case of the above-mentioned results of the experiment, the light at the above-mentioned reflection wavelength detected by the spectrum analyzer 300 becomes less and the decrease peak in the transmitted light quantity becomes greater as the distance from the grating 116 to the spectrum analyzer 300 is greater.

Thus, when the light to be blocked by the grating 116 passes through the grating 116 by way of the cladding 114, the light-blocking effect is insufficient in the grating 116. The optical filter according to the present invention is provided in view of such a fact. In the embodiment explained in the foregoing, of the light (inspection light) having a wavelength coinciding with the reflection wavelength of the grating 16, a light component radiated from the grating 16 to the cladding 14 is absorbed by the light-absorbing material added to the cladding 14, whereby the power of the light passing through the grating 16 is lowered. Accordingly, the optical filter 10 according to the present invention has a light-blocking ratio higher than that of the conventional optical filter.

Also, in the optical filter 10 according to the present invention, since the light-absorbing material is added to a part (outer region 140) of the cladding region 14 positioned outside of the light propagation region 17 defined by the mode field diameter of the signal light used for optical communications, this light-absorbing material does not attenuate the signal light. Accordingly, this optical filter 10 can be quite suitably used in the case in which it is employed as a constituent of an optical-line inspection system.

In this first embodiment, the light-absorbing material is added to the cladding region 14 at a portion outside of the light propagation region 17 over nearly all the area along the optical-axis direction of the optical filter. This is simply due to a matter of manufacture. As shown in Fig. 6, the light radiated from the grating 116 to the cladding 114 advances within the cladding 114 from each portion of the grating 116 toward a portion positioned obliquely in front thereof. Accordingly, also in the case of the optical filter according to the present invention, when the light-absorbing material is added to the portion positioned obliquely in front of the grating, light-blocking ratio is sufficiently increased even without any light-absorbing material added to the other portion.

While the optical filter 10 has a configuration similar to an optical fiber (comprising the core 12 and the cladding region 14), it may have a configuration (form) identical to a thin-film waveguide shown in Fig. 11 instead. Also in this case, like the optical fiber type waveguide (see Fig. 1), a light-absorbing material is added to a cladding region 34 to constitute an optical filter.

Also, the optical filter according to the present invention may comprise a plurality of gratings. For example, in the core region 12 of the optical filter 10 (of optical fiber type) shown in Fig. 7, a first grating 16a for reflecting light with a wavelength λ₁ and a second grating 16b for reflecting light with a wavelength λ₂ may be disposed. In this case, as the light-absorbing material to be added to the outer region 140 of the cladding region 14, a material which can absorb both of the wavelengths λ₁ and λ₂ to a certain extent is selected.

Further, as shown in Fig. 8, optical filters of optical fiber type respectively having gratings for reflecting different wavelengths of light may be inserted into a plurality of places in an optical line. Here, in this drawing, numerals 110 and 120 refer to communication optical fibers (respectively having cores 111 and 121 and claddings 112 and 122) constituting the optical line, while each optical filter is serially inserted between the communication optical fibers, each of which constitutes a part of the optical line, so as to function as a part of the optical line.

In the following, a second embodiment of the optical filter according to the present invention will be explained.

Fig. 9 is a lateral cross-sectional view showing a configuration of the second embodiment of an optical filter 20 according to the present invention. Fig. 10 is a cross-sectional view of the optical filter 20 taken along line B-B shown in Fig. 9. As in the case of the first embodiment (see Fig. 1), this optical filter 20, which comprises a core region 22 and a cladding region 24, has a configuration similar to that of a single-mode optical fiber. Also, the optical filter 20 can be used in an inspection system for optical communication network using an OTDR apparatus. In the optical filter 20, as in the case of the first embodiment, a grating 26 is formed in the core region 24. Though the core region 22 and the cladding region 24 have compositions substantially similar to those in the first embodiment; unlike the first embodiment, no light-absorbing material is added to the cladding region 24. Instead, the outer surface of the cladding region 24 is coated with a light-absorbing layer 28. This light-absorbing layer 28 may be formed by various materials according to light with a wavelength coinciding with the reflection wavelength of the grading 26. For example, when the reflection wavelength is at a band of 1.55 µm, the surface of the cladding region 24 is coated with polyimide which is an organic material. While the most part of the outer surface of the light-absorbing layer 28 is covered with a resin coating 25 as a reinforcement member, the coating 25 has been eliminated from a tip portion of the optical filter 20 in order to form the grating 26.

In the optical filter 20, of the light radiated from the grating 26 to the cladding region 24 so as to reach the outer surface of the cladding region 24, a light component radiated to the outside of the cladding region 24 is absorbed by the light-absorbing layer 28. Accordingly, even when this optical filter 20 is accommodated in an optical connector and the portion including the grating 26 is covered with a ferrule of the optical connector, suppressed is a phenomenon in which the light radiated from the grating 26 to the cladding region 24 is emitted out of the cladding region 24 so as to be reflected by the ferrule and then returns into the optical filter. Also, since the light-absorbing material generally has a refractive index higher than that of the air, the ratio at which the light radiated from the grating 26 to the cladding region 24 is emitted from the latter increases as compared with the case where an air layer exists on the surface of the cladding region 24. Accordingly, since the light emitted from the cladding region 24 is absorbed by the light-absorbing layer 28, the amount of the light radiated from the grating 26 to the cladding region 24 is securely lowered. Since, of the light (e.g., inspection light used by the OTDR apparatus) reflected by the grating 26, the power of the light component radiated to the cladding region 24 so as to pass through the grating 26 is lowered as explained above, the optical filter 20 of the second embodiment can block, with a ratio higher than that obtained conventionally, the light reflected by the grating 26, and it can fully exhibit a filter function even when accommodated in an optical connector.

While the light-absorbing layer 28 is disposed on the outer surface of the cladding region 24 over nearly all the area along the optical-axis direction (along the advancing direction of the signal light or the like), this is due to a matter of manufacture. As in the case of Fig. 6, the light radiated from the grating 26 to the cladding 24 advances within the cladding region 24 from each portion of the grating 26 toward a portion positioned obliquely in front thereof so as to reach the outer surface of the cladding region 24, and then a part thereof is emitted out of the cladding region 24. Accordingly, also in the case of the optical filter 20 in the second embodiment, when the light-absorbing layer 28 is disposed at a position obliquely in front of the grating 26, the light-blocking ratio for the unnecessary light advancing through the cladding region 24 is sufficiently increased even without any light-absorbing layer disposed at the other portion.

Though the optical filter 20 of Fig. 9 has a configuration similar to an optical fiber, it may have a configuration similar to a thin-film waveguide instead. Fig. 11 is an overall perspective view showing a configuration of an optical filter 30 according to the present invention in which a light-absorbing layer 38 is disposed on the surface of the cladding layer 34 of a thin-film waveguide. In this drawing, numerals 32, 34, and 38 refer to a core, the cladding layer, and the light-absorbing layer, respectively. At a predetermined portion of a part of the core 32, a grating 36 is formed. According to an effect similar to that of the above-mentioned optical filter 20, this optical filter 30 can block with a high ratio, of the light to be reflected by the grating 36, a light component radiated to the cladding layer 34.

The inventors have conducted experiments by using various kinds of light-absorbing materials to confirm effects of the waveguide type optical filter according to the present invention.

Initially, a sample of the optical filter 10 having a configuration shown in Fig. 1 was made to conduct a first experiment. Namely, in a step for making a preform for a silica glass-based optical fiber in which a core was doped with germanium, erbium which was a light-absorbing material for a band of 1.55 µm was impregnated into the cladding from the surface thereof so as to make an optical fiber preform in which the outer region of the cladding was doped with erbium. Then, in the core of an optical fiber obtained when this optical fiber preform was drawn, a grating having a reflection wavelength at the band of 1.55 µm was formed. Thus, the optical filter 10 of Fig. 1 was obtained. When the amount of attenuation in transmission of light at the band of 1.55 µm in this optical filter was measured in a manner similar to the above-mentioned experiment, a favorable result of -40 dB was obtained.

On the other hand, in an optical filter (having a grating in its core) in which the outer region of the cladding was not doped with erbium, the amount of attenuation in transmission of light at the band of 1.55 µm, measured as a comparative example, was -35 dB which was inferior to the result obtained in the optical filter 10 of Fig. 1.

Next, a sample of the optical filter 10 having a configuration shown in Fig. 1 was made to conduct a second experiment. Namely, in a step for making a preform for a silica glass-based optical fiber in which a core was doped with germanium, praseodymium which was a light-absorbing material for a band of 1.3 µm was impregnated into the cladding from the surface thereof so as to make an optical fiber preform in which the outer region of the cladding was doped with praseodymium. Then, in the core of an optical fiber obtained when this optical fiber preform was drawn, a grating having a reflection wavelength at the band of 1.3 µm was formed. Thus, the optical filter 10 of Fig. 1 was obtained. When the amount of attenuation in transmission of light at the band of 1.3 µm in this optical filter was measured in a manner similar to the above-mentioned experiment, a favorable result of -40 dB was obtained.

Thereafter, a sample of the optical filter 20 having a configuration shown in Fig. 2 was made to conduct a third experiment. Namely, after a preform for a silica glass-based optical fiber in which a core was doped with germanium was made, polyimide which was a light-absorbing material for a band of 1.55 µm was coated on the surface of the cladding. Then, in the core of an optical fiber obtained when this optical fiber preform was drawn, a grating having a reflection wavelength at the band of 1.55 µm was formed. Thus, the optical filter 20 of Fig. 9 was obtained. When the amount of attenuation in transmission of light at the band of 1.55 µm in this optical filter was measured in a manner similar to the above-mentioned experiment, a favorable result of -40 dB was obtained.

As explained in detail in the foregoing, the first embodiment (having the first light-absorbing material) of the optical filter according to the present invention can realize a high light-blocking ratio as viewed from the light-emitting end, since a light-absorbing material is added to, of the cladding region, the outer region where the light radiated from the grating reaches and thereby the light-absorbing material absorbs the radiated light.

Also, the second embodiment (having the second light-absorbing material) of the optical filter according to the present invention can realize a high light-blocking ratio as viewed from the light-emitting end, since a light-absorbing layer is disposed at a position on the surface of the cladding region where the light radiated from the grating reaches and thereby the light-absorbing layer absorbs the light radiated from the grating to the cladding and then emitted from the cladding.

From the invention thus described, it will be obvious that the invention may be varied in many ways. Such variations are not to be regarded as a departure from the spirit and scope of the invention, and all such modifications as would be obvious to one skilled in the art are intended to be included within the scope of the following claims.

The basic Japanese Application No.301455/1995 filed on November 20, 1995 is hereby incorporated by reference.

## Claims

1. An optical filter with a waveguide structure constituted by a core region having a predetermined refractive index, and a cladding region having a lower refractive index than said core region and covering said core region, said optical filter comprising:
a grating for reflecting light of a predetermined wavelength, said grating being disposed at a predetermined portion in said core region; and
a light-absorbing structure for absorbing, of light to be reflected by said grating, a light component radiated from said grating to said cladding region, said light-absorbing structure being disposed, at least, at a region where the light component radiated from said grating to said cladding region reaches.

2. An optical filter according to claim 1, wherein said light-absorbing structure includes a glass region constituting at least a part of said cladding region, said glass region being doped with a light-absorbing material for absorbing the light component radiated from said grating to said cladding region.

3. An optical filter according to claim 1, wherein said light-absorbing structure includes a light-absorbing layer for absorbing the light component radiated from said grating to said cladding region, said light-absorbing layer being disposed on an outer surface of at least a part of said cladding region.

4. An optical filter according to claim 2, wherein the glass region doped with said light-absorbing material is an outer region of said cladding region, said outer region being positioned outside of a light propagation region defined by a mode field diameter in said optical filter and being spaced from said core region by a predetermined distance.

5. An optical filter comprising:
a core region having a predetermined refractive index;
a cladding region having a lower refractive index than said core region and covering said core region;
a grating for reflecting light of a predetermined wavelength, said grating being disposed at a predetermined portion in said core region; and
a light-absorbing region for absorbing, of light to be reflected by said grating, a light component radiated from said grating to said cladding region, said light-absorbing region including a glass region which constitutes at least a part of said cladding region and which is doped with a light-absorbing material for absorbing the light component radiated from said grating to said cladding region, said glass region being disposed at a region where the light component radiated from said grating to said cladding region reaches.

6. An optical filter according to claim 5, wherein the glass region doped with said light-absorbing material is an outer region of said cladding region, said outer region being positioned outside of a light propagation region defined by a mode field diameter in said optical filter and being spaced from said core region by a predetermined distance.

7. An optical filter comprising:
a core region having a predetermined refractive index;
a cladding region having a lower refractive index than said core region and covering said core region;
a grating for reflecting light of a predetermined wavelength, said grating being disposed at a predetermined portion in said core region; and
a light-absorbing layer for absorbing, of light to be reflected by said grating, a light component radiated from said grating to said cladding region, said light-absorbing layer being disposed on an outer surface of at least a part of said cladding region, said part of said cladding region being disposed at a region where the light component radiated from said grating reaches.
